# EUROPÄISCHE PATENTSCHRIFT

(11) **EP 0 860 642 B1**
(45) Veröffentlichungstag und Bekanntmachung des Hinweises auf die Patenterteilung: **26.06.2002**
(21) Anmeldenummer: 97122586.7
(22) Anmeldetag: 20.12.1997
(51) Int. Cl.: F16L 37/088

(54) **Druckmittel-Steckkupplung**
Plug connector for pressurized fluid
Raccord rapide pour fluide sous pression

(30) Priorität: 25.02.1997 DE 19707372
(43) Veröffentlichungstag der Anmeldung: 26.08.1998
(73) Patentinhaber: Voss Automotive GmbH, 51688 Wipperfürth (DE)
(72) Erfinder: Hester, Hilmar, 51 688 Wipperfürth (DE); Rüdiger, Andreas, 51 069 Köln (DE)
(74) Vertreter: Patentanwälte Dr. Solf & Zapf

(56) Entgegenhaltungen:
- EP-A- 0 748 975
- EP-A- 0 810 399
- DE-A- 3 831 611
- GB-A- 799 155

## Beschreibung

Die vorliegende Erfindung betrifft eine Steckkupplung für Druckmittelsysteme, bestehend aus zwei Kupplungsteilen, und zwar einem Gehäuseteil und einem Steckerteil, wobei das Steckerteil abgedichtet in eine Aufnahmeöffnung des Gehäuseteils einsteckbar und über eine Verriegelungseinrichtung gegen Lösen arretierbar ist, und wobei die Verriegelungseinrichtung ein elastisch verformbares Halteelement aufweist, das auf der Seite des einen Kupplungsteils gelagert ist und zum Arretieren des Steckerteils im eingesteckten Zustand eine Raststufe des anderen Kupplungsteils formoder kraftformschlüssig hintergreift.

Derartige Steckkupplungen sind hinlänglich aus zahlreichen Veröffentlichungen bekannt. Lediglich beispielsweise seien hier die GB-A-799 155 und die EP-B-0 005 865 genannt. Gemäß der erstgenannten Veröffentlichung ist ein Haltering in einer Umfangsnut am Steckerteil vormontiert. Beim Einstecken erfolgt eine elastische Verformung radial nach innen über eine Innenkonusfläche im Mündungsbereich der Aufnahmeöffnung des Gehäuseteils. Die zweitgenannte Veröffentlichung beschreibt Ausführungen, wobei ein Haltering bzw. eine Halteklammer in einer inneren Gehäuseausnehmung sitzt und beim Einstecken des Steckers über einen an dessen Ende vorgesehenen Außenkonus gespreizt wird, bis er in eine Außenringnut des Steckers einrastet.

Das Dokument EP 0 748 975 zeigt eine Steckkupplung mit einem konventionnellen Doppelhalteelement, dieses gewährleistet eine Vor- und Vollraststellung beim Steckvorgang.

Bei solchen bekannten Steckkupplungen besteht das Problem, daß bei Auslegung für hohe Systemdrücke das Halteelement auch entsprechend stark - insbesondere mit großem Querschnitt - dimensioniert sein muß, um hinreichend hohe Haltekräfte gegen Lösen des Steckerteils zu gewährleisten. Dies führt aber nachteiligerweise auch zu sehr hohen zum Einstecken erforderlichen Steckkräften, die zum Teil ein Stecken von Hand unmöglich machen.

Die Erfindung wird von den Merkmalen des Anspruchs 1 definiert.

Der vorliegenden Erfindung liegt die Aufgabe zugrunde, eine Steckkupplung der gattungsgemäßen Art so zu verbessern, daß relativ hohe Haltekräfte bei gleichzeitig derart relativ geringen Steckkräften gewährleistet sind, daß auch bei Auslegung für hohe Drücke ein manuelles Stecken leicht möglich ist.

Erfindungsgemäß wird dies dadurch erreicht, daß das Halteelement derart aus mindestens zwei in Steckrichtung gesehen hintereinanderliegenden Einzelelementen besteht, daß beim Steckvorgang die Einzelelemente sukzessive radial verformt werden und sukzessive nacheinander die Raststufe hintergreifen. Erfindungsgemäß ist somit ein in mehrere lamellenförmige und paketartig aneinanderliegende Einzelelemente gesplittetes Halteelement vorgesehen. Dies führt dazu, daß beim Steckvorgang zum radialen Verformen der Einzelelemente jeweils eine relativ geringe Kraft ausreicht, wobei auch die Summe der Einzelkräfte vorteilhafterweise geringer als bei einem vergleichbaren einteiligen Halteelement ist. Dies liegt daran, daß zu Beginn des Einsteckens zunächst nur eines der Einzelelemente verformt zu werden braucht. Bei fortschreitendem Einstecken erfolgt die Verformung der weiteren Einzelelemente dann sukzessive, bis die ersten Einzelelemente bereits wieder durch elastische Rückverformung hinter die Raststufe einrasten, was eine Reduzierung der Steckkraft insgesamt darstellt. Wenn alle Einzelelemente eingerastet sind, gewährleisten diese eine relativ hohe Haltekraft bedingt durch ihre paketartige Anordnung, da eine gute Abstützung der in Löserichtung wirkenden Kräfte über alle aneinanderliegenden Einzelelemente gemeinsam erreicht wird. Durch die erfindungsgemäße "Splittung" ist es zudem möglich, die Einzelelemente aus Federstahlblech herzustellen. Durch ihre relativ dünne, lamellenförmige Ausgestaltung sind auch dabei die Steckkräfte noch vergleichsweise gering, es wird jedoch eine besonders hohe Haltekraft erreicht, so daß die erfindungsgemäße Steckkupplung für hohe Drücke geeignet ist, vorteilhafterweise aber dennoch - bedingt durch die sukzessive Betätigung der Einzelelemente - von Hand gesteckt werden kann.

Weitere vorteilhafte Ausgestaltungsmerkmale der Erfindung sind in den Unteransprüchen sowie der folgenden Beschreibung enthalten.

Anhand von in der Zeichnung dargestellten, bevorzugten Ausführungsbeispielen soll im folgenden die Erfindung näher erläutert werden. Dabei zeigen:
- Fig. 1: einen Längsschnitt durch eine erfindungsgemäße Steckkupplung in einer ersten Ausführungsform,
- Fig. 2: einen Längsschnitt analog zu Fig. 1 einer Einzelkomponente mit einem erfindungsgemäßen Halteelement,
- Fig. 3: einen Schnitt in der Ebene III-III gemäß Fig. 2,
- Fig. 4: eine Teilansicht in Pfeilrichtung IV gemäß Fig. 2 und 3,
- Fig. 5: einen Längsschnitt durch eine erfindungsgemäße Steckkupplung ähnlich Fig. 1, jedoch in einer alternativen Ausführungsform,
- Fig. 6: einen Querschnitt in der Ebene VI-VI gemäß Fig.5,
- Fig. 7: eine Darstellung einer Einzelkomponente ähnlich Fig. 2, jedoch in der Ausführung nach Fig. 5,
- Fig. 8: einen Bestandteil des erfindungsgemäßen Halteelementes im Axialschnitt,
- Fig. 9: einen Querschnitt in der Ebene IX-IX gemäß Fig.7,
- Fig. 10: in teilgeschnittener Draufsicht zwei Einzelteile des erfindungsgemäßen Halteelementes zur Erläuterung der Montage,
- Fig. 11: eine schematische Längsschnittdarstellung einer herkömmlichen Steckkupplung während des Steckvorganges,
- Fig. 12: ein Steckkraft-Diagramm zur Ausführung nach Fig.11,
- Fig. 13: eine schematische Längsschnittdarstellung einer erfindungsgemäßen Steckkupplung während des Steckvorganges und
- Fig. 14: ein Steckkraft-Diagramm zur erfindungsgemäßen Ausführung nach Fig. 13.

In den verschiedenen Figuren der Zeichnung sind gleiche Teile stets mit den gleichen Bezugszeichen versehen und werden daher in der Regel auch jeweils nur einmal beschrieben.

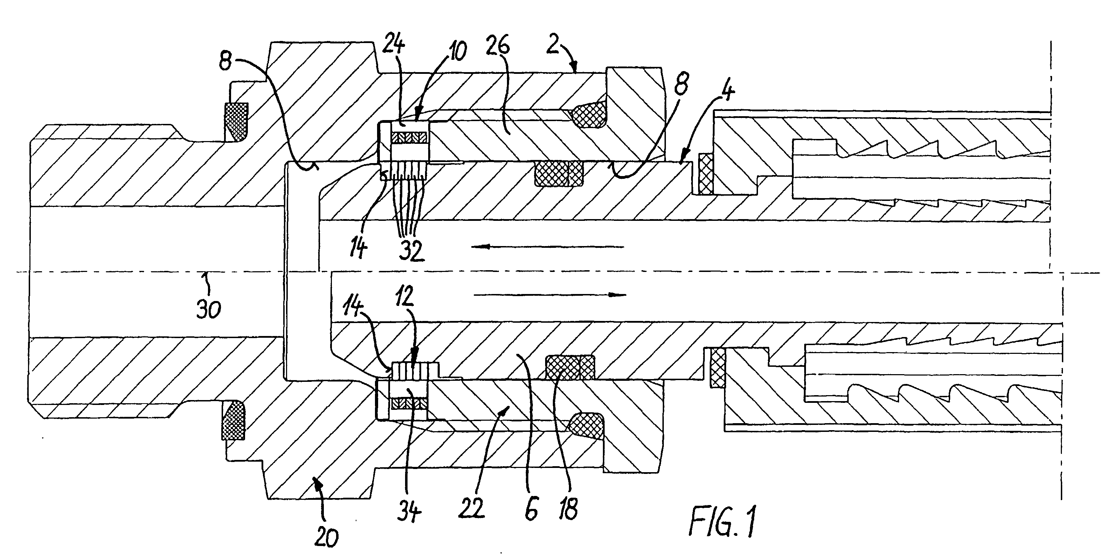

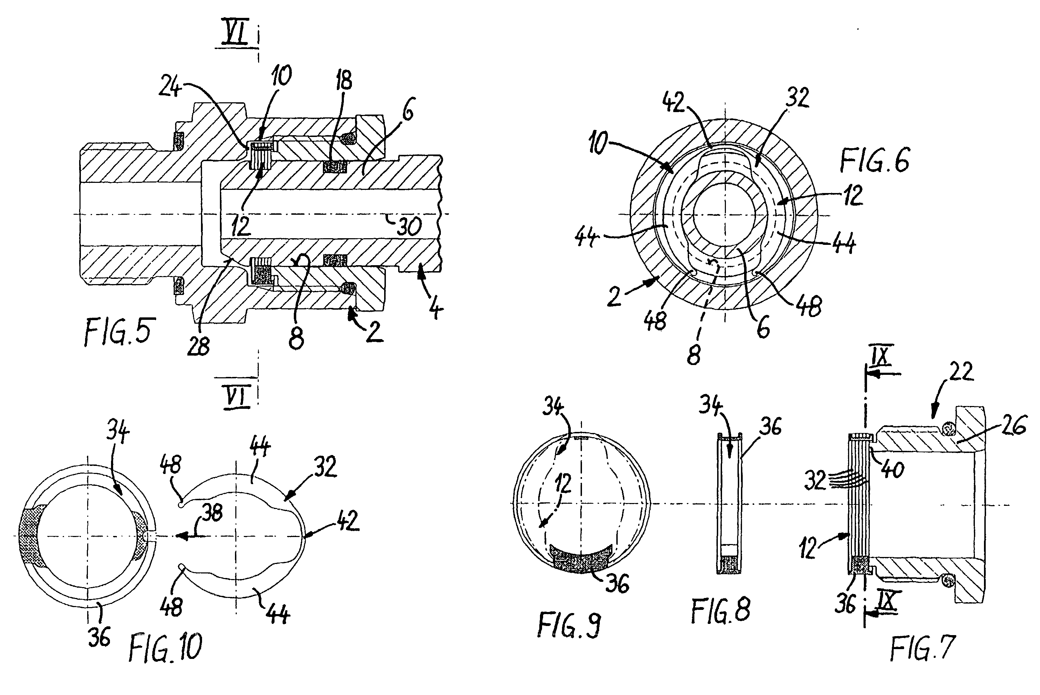

Wie sich aus Fig. 1 und 5 jeweils ergibt, besteht eine erfindungsgemäße Steckkupplung aus zwei Kupplungsteilen, nämlich einem Gehäuseteil 2 und einem Steckerteil 4. Das Steckerteil 4 ist mit einem im wesentlichen zylindrischen Steckerschaft 6 umfangsgemäß abgedichtet in eine Aufnahmeöffnung 8 des Gehäuseteils 2 einsteckbar und im eingesteckten Zustand über eine Verriegelungseinrichtung 10 gegen Lösen arretierbar. Hierzu weist die Verriegelungseinrichtung 10 ein in radialer Richtung elastisch verformbares Halteelement 12 auf, das auf der Seite des einen Kupplungsteils - im dargestellten Ausführungsbeispiel des Gehäuseteils 2 - gelagert ist und zum Arretieren des Steckerteils 4 im eingesteckten Zustand eine Raststufe 14 des anderen Kupplungsteils - wie dargestellt des Steckerteils 4 bzw. des Steckerschaftes 6 - form- oder kraftformschlüssig hintergreift. Dieser Verriegelungszustand ist in den Fig.1 und 5 jeweils dargestellt.

Vorzugsweise ist die Raststufe 14 durch eine Außenringnut 16 mit insbesondere rechteckigem Nutquerschnitt am Steckerschaft 6 gebildet. Zur umfangsgemäßen Abdichtung sitzt eine Umfangsdichtung 18 in einer weiteren Ringnut des Steckerschaftes 6.

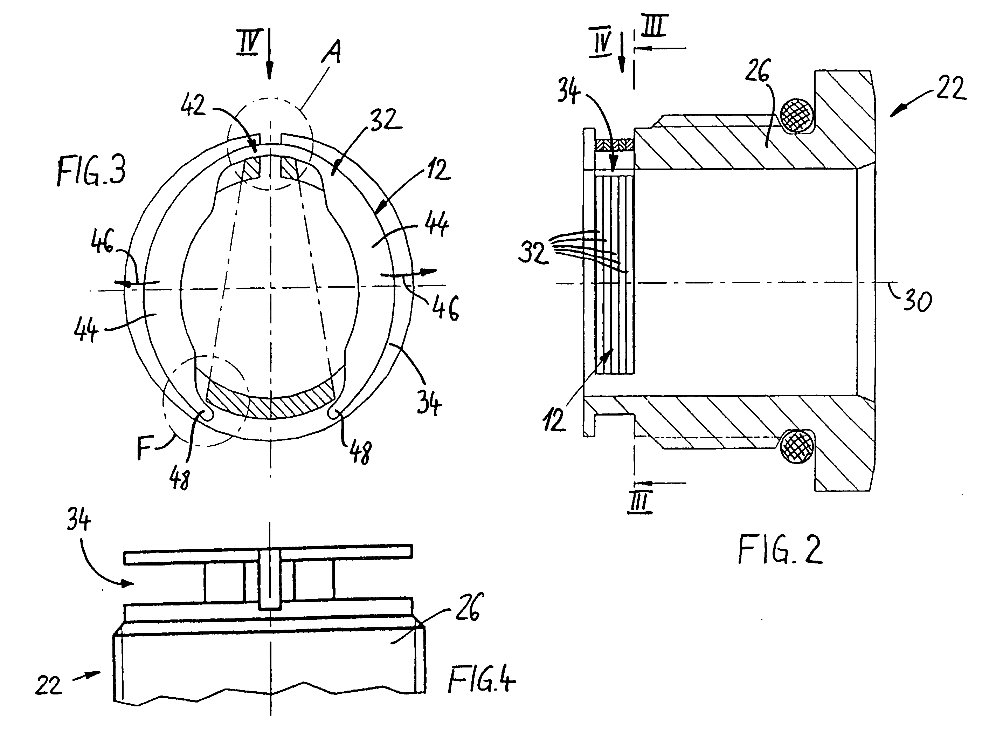

Um eine Lösbarkeit des Steckerteils 4 zu gewährleisten, besteht in den bevorzugten Ausführungsformen das Gehäuseteil 2 aus zwei lösbar miteinander verbundenen Teilen, und zwar aus einem Basisteil 20 und einem Verschlußteil 22. Das Basisteil 20 und das Verschlußteil 22 begrenzen gemeinsam eine Kammer 24 zur bereichsweisen Aufnahme des Halteelementes 12. Das Verschlußteil 22 kann - wie dargestellt - als ein im wesentlichen hohlzylindrisches und dabei einen Teil der Aufnahmeöffnung 8 bildendes, bereichsweise in eine Öffnung des Basisteils 20 einsetzbares Einsatzteil 26, beispielsweise in Form einer Überwurfschraube, ausgebildet sein. Hierzu wird auch auf Fig. 2 und 7 verwiesen. Die Ausgestaltung des Verschlußteils 22 ist jedoch grundsätzlich beliebig. So kann das Einsatzteil 26 auch über andere geeignete Verbindungsmittel mit dem Basisteil 20 verbunden sein, beispielsweise über eine Rastverbindung und/oder eine Bajonettverbindung. Ferner kann das Verschlußteil 22 auch beliebig deckelartig, beispielsweise in Form einer ebenen Verschlußplatte (vgl. hierzu z.B. die DE 39 25 293 C2 und die DE 38 10 385 A1), ausgebildet sein.Dabei kommt es stets nur darauf an, die Aufnahmekammer für das Halteelement zu verschließen und durch eine Demontage und/oder eine Lageveränderung des Verschlußteils eine Demontage des Steckers (zusammen mit dem Halteelement) zu ermöglichen.

Zum radialelastischen Spreizen des Halteelementes 12, welches bereichsweise in die Aufnahmeöffnung 8 und damit in den Querschnittsbereich des Steckerschaftes 6 hineinragt (vgl. auch Fig. 3 und 6), weist das Steckerteil 4 am freien Ende des Steckerschaftes 6 eine Außenkonusfläche 28 auf.

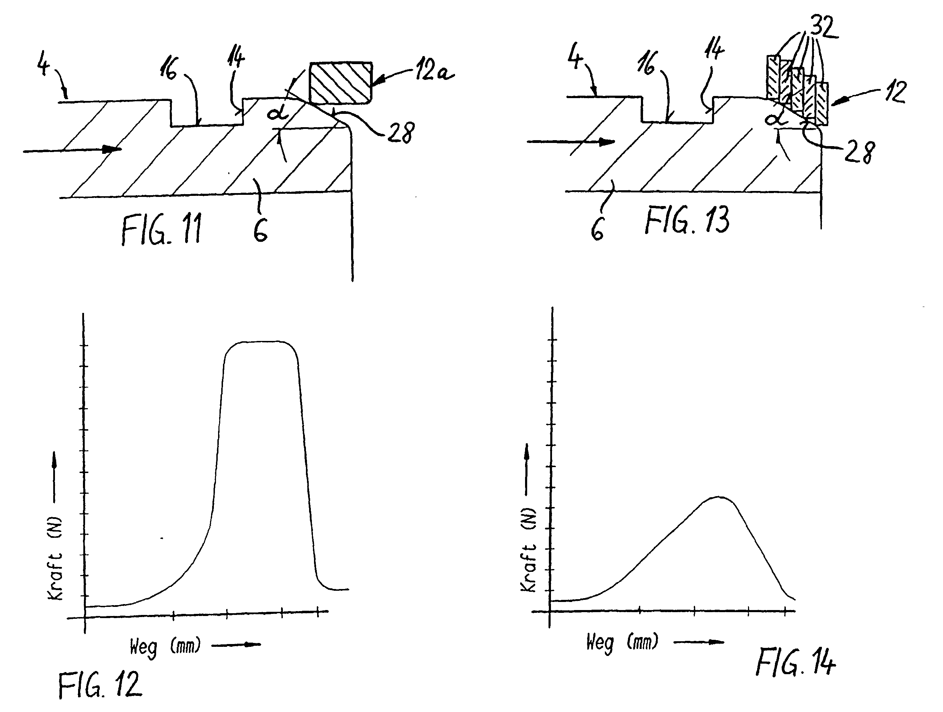

Gemäß Fig. 11 bzw. 13 schließt diese Außenkonusfläche 28 mit der Steckachse 30 einen Konuswinkel α ein. Dieser Winkel α liegt zweckmäßig etwa im Bereich von 20° bis 45°; vorzugsweise ist α etwa 30°. Dabei kann vorteilhafterweise durch Wahl des Winkels α die Steckkraft beeinflußt werden; je kleiner (flacher) α ist, desto geringer ist auch die Steckkraft und umgekehrt.

Erfindungsgemäß ist nun vorgesehen, daß das Halteelement 12 derart aus mindestens zwei in Steckrichtung gesehen hintereinanderliegenden Einzelelementen 32 besteht, daß beim Steckvorgang - vgl. hierzu insbesondere Fig. 13 - die Einzelelemente 32 sukzessive radial verformt werden und sukzessive nacheinander die Raststufe 14 hintergreifen. Wie aus dem zugehörigen Diagramm in Fig. 14 deutlich wird, wird hierdurch ein relativ flacher Verlauf der insgesamt relativ geringen Steckkraft über den Steckweg hinweg erreicht.

Im Vergleich dazu ist in Fig. 11 eine Ausführungsform mit einem herkömmlichen Halteelement 12a dargestellt, welches als einteiliges Blockhalteelement ausgebildet ist. Gemäß dem Diagramm in Fig. 12 wird über den Steckweg hinweg stets das gesamte Halteelement 12a elastisch verformt, was insgesamt zu einer steil ansteigenden und großen Steckkraft über den gesamten Weg hinweg führt.

Die Einzelelemente 32 sind lamellenförmig als radial elastisch verformbare Klammern oder Federringe ausgebildet. Diese bestehen bevorzugt aus Metall, insbesondere aus Federstahlblech. Es können zwei bis mindestens sechs Einzelelemente vorgesehen sein. In den bevorzugten Ausführungsformen handelt es sich um fünf gleichartig lamellenförmige Einzelelemente 32, die praktisch paketartig aneinanderliegen. Die genannte axial gemessene Paketdicke, die Anzahl der Einzelelemente 32 und deren einzelne Dicke sind im Grunde frei wählbar, wobei vor allem die Paketdicke eine einsatzbezogene, hauptsächlich vom inneren Systemdruck abhängige Größe ist, weil sie für die Haltekraft maßgeblich ist.

Zweckmäßigerweise sind die Einzelelemente 32 in einem Aufnahmekäfig 34 unverlierbar und in einer steckbereiten Position gehaltert.

In der ersten Ausführungsform nach Fig. 1 bis 4 ist dieser Aufnahmekäfig 34 integraler Bestandteil des Verschlußteils 22. Der Aufnahmekäfig 34 wird durch eine bestimmte Querschlitzung am einzusetzenden Ende des Einsatzteils 26 gebildet.

In der zweiten Ausführungsform nach Fig. 5 bis 10 wird der Aufnahmekäfig 34 von einem separaten, beispielsweise aus Kunststoff bestehenden Ringelement 36 gebildet. Dieses Ringelement ist gesondert in Fig. 8 dargestellt. Es ist ebenfalls entsprechend quergeschlitzt, so daß die Einzelelemente 32 gemäß Fig. 10 quer zur Steckachse 30 in Pfeilrichtung 38 in den Aufnahmekäfig 34 eingeführt werden können. Gemäß Fig. 7 sitzt das Ringelement 36 zweckmäßigerweise auf einem Ringansatz 40 des Verschlußteils 22 bzw. des Einsatzteils 26. In der montierten Stellung gemäß Fig. 5 sitzt dann der Aufnahmekäfig 34 mit den Einzelelementen 32 in der Kammer 24.

Wie sich insbesondere aus Fig. 3, 6 und 10 jeweils ergibt, besteht jedes Einzelelement 32 zweckmäßigerweise aus zwei über ein Federgelenk 42 verbundenen und dadurch in radialer Richtung elastisch beweglichen Federarmen 44. Die radialelastische Beweglichkeit ist in Fig. 3 durch Pfeile 46 veranschaulicht. Das Federgelenk 42 wird bevorzugt von einem verschmälerten Verbindungsabschnitt zwischen den beiden Federarmen 44 gebildet. In diesem Bereich liegen gemäß Fig. 3 die Einzelelemente 32 innerhalb des Aufnahmekäfigs 34 an (Anlagebereich A in Fig. 3). Die Federarme 44 selbst weisen über einen Umfangsbereich von jeweils etwa 90° hinweg eine zumindest annähernd kreisringscheibenförmige Kontur auf, die bereichsweise mit der Raststufe 14 des Steckerteils 4 zusammenwirkt. Durch diese Ausgestaltung verformen sich die Federarme 44 selbst beim Steckvorgang praktisch nicht, vielmehr bewegen sie sich im wesentlichen durch eine Verformung im Bereich des Federgelenkes 42 in Richtung der Pfeile 46 in Fig. 3. Diese beschriebene, bevorzugte Ausgestaltung gewährleistet sehr geringe Betätigungskräfte, indem die Einzelelemente 32 sehr leicht spreizbar sind.

Gemäß Fig. 10 erfolgt das Einsetzen der Einzelelemente 32 in den Aufnahmekäfig 34 mit den Federarmen 44 voran, bis das Federgelenk 42 zur Anlage gelangt. Um dabei die Einzelelemente 32 unverlierbar zu fixieren, weisen die Federarme 44 an ihrem freien Enden jeweils einen Halteansatz 48 derart auf, daß im eingesetzten Zustand die Halteansätze 48 kraft- und/oder formschlüssig mit dem Aufnahmekäfig 34 zusammenwirken. Hierzu wird auf Fig. 3 und den darin hervorgehobenen Fixierbereich F verwiesen.

So ist das erfindungsgemäße Halteelement grundsätzlich auch für eine Ausführungsform geeignet, bei der das Halteelement am Steckerteil 4 vormontiert ist und beim Einstecken über einen Innenkonus des Gehäuseteils radial nach innen verformt wird, bis es eine entsprechende Raststufe des Gehäuseteils hintergreift.

## Patentansprüche

1. Steckkupplung für Druckmittelsysteme, bestehend aus zwei Kupplungsteilen, und zwar einem Gehäuseteil (2) und einem Steckerteil (4), wobei das Steckerteit (4) abgedichtet in eine Aufnahmeöffnung (8) des Gehäuseteils (2) einsteckbar und über eine Verriegelungseinrichtung (10) gegen Lösen arretierbar ist, und wobei die Verriegelungseinrichtung (10) ein elastisch verformbares Halteelement (12) aufweist, das auf der Seite des einen Kupplungsteils gelagert ist und zum Arretieren des Steckerteils (4) im eingesteckten Zustand eine Raststufe (14) des anderen Kupplungsteils form- oder kraftformschlüssig hintergreift, **dadurch gekennzeichnet, dass** das Halteelement (12) derart aus mehreren in Steckrichtung gesehen hintereinanderliegenden, lamellenförmig als radial elastisch verformbare Klammem oder Federringe ausgebildeten und paketartig aneinanderliegenden Einzelelementen (32) besteht, dass beim Steckvorgang die Einzelelemente (32) sukzessive radial verformt werden und sukzessive nacheinander die Raststufe (14) hintergreifen.

2. Steckkupplung nach Anspruch 1,
**dadurch gekennzeichnet, dass** vier bis sechs, insbesondere fünf, gleichartig lamellenförmige Einzelelemente (32) paketartig aneinanderliegen.

3. Steckkupplung nach Anspruch 1 oder 2,
**dadurch gekennzeichnet, dass** das Halteelement (12) innerhalb der Aufnahmeöffnung (8) des Gehäuseteils (2) gehaltert ist und mit der am Steckerteil (4) ― insbesondere durch eine Außenringnut (16) ― gebildeten Raststufe (14) zusammenwirkt.

4. Steckkupplung nach Anspruch 3,
**dadurch gekennzeichnet, dass** das Steckerteil (4) an seinem Einsteckende zum radialen Spreizen des Halteelements (12) eine Außenkonusfläche (28) derart aufweist, dass beim Einstecken die Einzelelemente (32) über die Konusfläche (28) hinweg sukzessive gespreizt werden und dann sukzessive nacheinander die Raststufe (14) formschlüssig hintergreifen.

5. Steckkupplung nach einem oder mehreren der Ansprüche 1 bis 4,
**dadurch gekennzeichnet, dass** die Einzelelemente (32) in einem Aufnahmekäfig (34) gehaltert sind.

6. Steckkupplung nach Anspruch 5,
**dadurch gekennzeichnet, dass** der Aufnahmekäfig (34) von einem separaten Ringelement (36) gebildet ist.

7. Steckkupplung nach einem oder mehreren der Ansprüche 1 bis 6,
**dadurch gekennzeichnet, dass** das Gehäuseteil (2) aus zwei Iösbar verbundenen Teilen besteht, und zwar einem Basisteil (20) und einem zusammen mit dem Basisteil (20) eine Kammer (24) für das Halteelement (12) begrenzenden Verschlußteil (22).

8. Steckkupplung nach Anspruch 7,
**dadurch gekennzeichnet, dass** das Verschlußteil (22) als ein im wesentlichen hohlzylindrisches, bereichsweise in eine Öffnung des Basisteils (20) einsetzbares Einsatzteil (26), insbesondere als Überwurfschraube, ausgebildet ist.

9. Steckkupplung nach Anspruch 5 und 7 oder nach Anspruch 5 und 8,
**dadurch gekennzeichnet, dass** der Aufnahmekäfig (34) integraler Bestandteil des Verschlußteils (22) ist

10. Steckkuppfung nach einem oder mehreren der Ansprüche 1 bis 9,
**dadurch gekennzeichnet, dass** die Einzelelemente (32) jeweils aus zwei über ein Federgelenk (42) verbundenen und dadurch radial elastisch beweglichen Federarmen (44) bestehen.

11. Steckkupplung nach Anspruch 10,
**dadurch gekennzeichnet, dass** die Federarme (44) bereichsweise eine zumindest annähemd kreisringscheibenförmige Kontur aufweisen, die mit der Raststufe (14) des Kupplungsteils (4) zusammenwirkt.

12. Steckkupplung nach Anspruch 10 oder 11,
**dadurch gekennzeichnet, dass** der Aufnahmekäfig (34) derart quer zur Steckachse (30) geschlitzt ist, dass die Einzeielemente (32) in radialer Richtung mit den Federarmen (44) voran (Fig. 10) in den Aufnahmekäfig (34) einsetzbar sind.

13. Steckkupplung nach einem oder mehreren der Ansprüche 1 bis 12,
**dadurch gekennzeichnet, dass** die Einzelelemente (32) für eine unverlierbare Fixierung innerhalb des Aufnahmekäfigs (34) an den freien Enden der Federarme (44) jeweils einen Halteansatz (48) derart aufweisen, dass im eingesetzten Zustand die Halteansätze (48) kraft- und/oder formschlüssig mit dem Aufnahmekäfig (34) zusammenwirken.

14. Steckkupplung nach einem oder mehreren der Ansprüche 1 bis 13,
**dadurch gekennzeichnet, dass** die Einzelelemente (32) des Halteelementes (12) aus Metall, insbesondere Federstahlblech, bestehen.

## Claims

1. Plug-in coupling for pressure medium systems, comprising two coupling parts, specifically a housing part (2) and a plug part (4), it being possible for the plug part (4) to be plugged in a sealed manner into a receiving opening (8) in the housing part (2) and locked against detachment by means of a locking device (10), and the locking device (10) having an elastically deformable retaining element (12), which is mounted on the side of one coupling part and, in order to lock the plug part (4) in the plugged-in state, engages with a form fit or force fit behind a latching step (14) on the other coupling part, **characterized in that** the retaining element (12) comprises a plurality of individual elements (32) which, as viewed in the plug-in direction, lie one behind another, are formed in the manner of slats as radially elastically deformable clamps or spring rings and rest on one another in the manner of a pack in such a way that, during the plug-in operation, the individual elements (32) are gradually radially deformed and gradually engage, one after another, behind the latching step (14).

2. Plug-in coupling according to Claim 1, **characterized in that** four to six, in particular five, identical slat-like individual elements (32) rest on one another in the manner of a pack.

3. Plug-in coupling according to Claim 1 or 2, **characterized in that** the retaining element (12) is retained within the receiving opening (8) in the housing part (2) and interacts with the latching step (14) formed on the plug part (4) - in particular by means of an external annular groove (16).

4. Plug-in coupling according to Claim 3, **characterized in that** the plug part (4) has an outer conical face (28) at its plug-in end to spread the retaining element (12) radially in such a way that, during the plug-in action, the individual elements (32) are gradually spread over the conical face (28) and then gradually engage, one after another, with a form fit behind the latching step (14).

5. Plug-in coupling according to one or more of Claims 1 to 4, **characterized in that** the individual elements (32) are held in a holding cage (34).

6. Plug-in coupling according to Claim 5, **characterized in that** the holding cage (34) is formed by a separate ring element (36).

7. Plug-in coupling according to one or more of Claims 1 to 6, **characterized in that** the housing part (2) comprises two detachably connected parts, specifically a base part (20) and a closure part (22) which, together with the base part (20), bounds a chamber (24) for the retaining element (12).

8. Plug-in coupling according to Claim 7, **characterized in that** the closure part (22) is formed as a substantially hollow cylindrical insert part (26) which can be inserted to some extent into an opening in the base part (20), in particular as a union screw.

9. Plug-in coupling according to Claim 5 and 7 or according to Claim 5 and 8, **characterized in that** the holding cage (34) is an integral component of the closure part (22).

10. Plug-in coupling according to one or more of Claims 1 to 9, **characterized in that** the individual elements (32) in each case comprise two spring arms (44) which are connected via a spring hinge (42) and, as a result, can be moved radially and elastically.

11. Plug-in coupling according to Claim 10, **characterized in that** the spring arms (44) have in some regions a contour at least approximately shaped like a circular annular disc, which interacts with the latching step (14) of the coupling part (4).

12. Plug-in coupling according to Claim 10 or 11, **characterized in that** the holding cage (34) is slotted transversely with respect to the plug-in axis (30) in such a way that the individual elements (32) can be inserted into the holding cage (34) in the radial direction with the spring arms (44) leading (Fig. 10).

13. Plug-in coupling according to one or more of Claims 1 to 12, **characterized in that**, for a captive fixing within the holding cage (34), the individual elements (32) each have, at the free ends of the spring arms (44), a retaining extension (48) such that, in the inserted state, the retaining extensions (48) interact with a force fit and/or form fit with the holding cage (34).

14. Plug-in coupling according to one or more of Claims 1 to 13, **characterized in that** the individual elements (32) of the retaining element (12) consist of metal, in particular spring steel sheet.

## Revendications

1. Raccord emboîtable pour systèmes de fluides sous pression, comprenant deux parties d'accouplement, à savoir une partie boîtier (2) et une partie à emboîter (4), la partie à emboîter (4) pouvant être emboîtée de manière étanche dans une ouverture de réception (8) de la partie boîtier (2) et être bloquée pour empêcher la séparation par l'intermédiaire d'un dispositif de verrouillage (10), et le dispositif de verrouillage (10) présentant un élément de retenue (12) déformable élastiquement, logé sur le côté d'une partie d'accouplement et s'engageant, pour bloquer la partie à emboîter (4) dans la position d'emboîtement, de manière solidaire par une liaison dynamique ou avec correspondance de forme, derrière un cran de blocage (14) de l'autre partie d'accouplement, **caractérisé en ce que** l'élément de retenue (12) comprend plusieurs éléments isolés (32), situés l'un derrière l'autre quand on regarde dans le sens de l'emboîtement, conçus en forme de lamelles comme des pinces ou rondelles-ressorts déformables élastiquement dans le sens radial et situés les uns à côté des autres pour former un ensemble, **en ce que** lors de l'emboîtement les différents éléments (32) sont successivement déformés dans le sens radial et qu'ils s'engagent successivement l'un après l'autre derrière le cran de blocage (14).

2. Raccord à emboîtement selon la revendication 1, **caractérisé en ce que** quatre à six, en particulier cinq, éléments isolés (32) identiques en forme de lamelles sont disposés les uns à côté des autres pour former un ensemble.

3. Raccord à emboîtement selon la revendication 1 ou 2, **caractérisé en ce que** l'élément de retenue (12) est maintenu à l'intérieur de l'ouverture de réception (8) de la partie boîtier (2) et coopère avec le cran de blocage (14) formé sur la partie à emboîter (4), en particulier par une rainure annulaire extérieure (16).

4. Raccord à emboîtement selon la revendication 3, **caractérisé en ce que** la partie à emboîter (4) présente à son extrémité à emboîter, pour écarter l'élément de retenue (12) dans le sens radial, une surface cônique extérieure (28) de telle sorte que, lors de l'emboîtement, les différents éléments (32) sont écartés successivement sur la surface cônique (28), puis s'engagent, de manière solidaire avec correspondance de forme, successivement l'un après l'autre derrière le cran de blocage (14).

5. Raccord à emboîtement selon l'une ou plusieurs des revendications 1 à 4, **caractérisé en ce que** les différents éléments (32) sont maintenus dans une cage de réception (34).

6. Raccord à emboîtement selon la revendication 5, **caractérisé en ce que** la cage de réception (34) est formée par un élément annulaire séparé (36).

7. Raccord à emboîtement selon l'une ou plusieurs des revendications 1 à 6, **caractérisé en ce que** la partie boîtier (2) est constituée de deux parties reliées de manière séparable, à savoir une partie de base (20) et une partie d'obturation (22) qui délimite, avec la partie de base (20), une chambre (24) pour l'élément de retenue (12).

8. Raccord à emboîtement selon la revendication 7, **caractérisé en ce que** la partie d'obturation (22) est formée comme une pièce essentiellement cylindrique creuse pouvant être insérée par endroits dans une ouverture de la partie de base (20), en particulier comme un écrou-raccord.

9. Raccord à emboîtement selon les revendications 5 et 7 ou 5 et 8, **caractérisé en ce que** la cage de réception (34) fait partie intégrante de la partie d'obturation (22).

10. Raccord à emboîtement selon l'une ou plusieurs des revendications 1 à 9, **caractérisé en ce que** les différents éléments (32) comprennent deux bras élastiques (44) reliés par l'intermédiaire d'une articulation élastique (42) et, par là même, mobiles de manière élastique dans le sens radial.

11. Raccord à emboîtement selon la revendication 10, **caractérisé en ce que** les bras élastiques (44) présentent par endroits, au moins de manière approchée, un contour en forme de disque annulaire, qui coopère avec le cran de blocage (14) de la partie d'accouplement (4).

12. Raccord à emboîtement selon la revendication 10 ou 11, **caractérisé en ce que** la cage de réception (34) est fendue transversalement à l'axe d'emboîtement (30), de telle sorte que les différents éléments (32) peuvent être insérés dans le sens radial dans la cage de réception (34) avec les bras élastiques (44) en avant (figure 10).

13. Raccord à emboîtement selon l'une ou plusieurs des revendications 1 à 12, **caractérisé en ce que** les différents éléments (32) présentent, pour une fixation imperdable à l'intérieur de la cage de réception (34), à chaque extrémité libre des bras élastiques (44), un embout de retenue (48), de telle manière que, dans la position d'insertion, les embouts de retenue (48) coopèrent avec la cage de réception (34) de manière solidaire par une liaison dynamique et/ou avec correspondance de forme.

14. Raccord à emboîtement selon l'une ou plusieurs des revendications 1 à 13, **caractérisé en ce que** les différents éléments (32) de l'élément de retenue (12) sont en métal, en particulier en tôle d'acier pour ressorts.
